# DEMANDE DE BREVET EUROPEEN

(11) **EP 2 633 905 A1**
(43) Date de publication de la demande: **04.09.2013**
(21) Numéro de dépôt: 13305236.5
(22) Date de dépôt: 01.03.2013
(51) Int. Cl.: B01J 19/24, B01F 5/00, C02F 1/52

(54) **Procédé et dispositif pour la réalisation d'une réaction chimique polyphasée**

(30) Priorité: 02.03.2012 FR 1251952
(71) Demandeur: Bergonzo, Maurice, 92400 Courbevoie (FR)
(72) Inventeur: Bergonzo, Maurice, 92400 Courbevoie (FR)
(74) Mandataire: Coralis Harle

(57) **Abrégé**

La présente invention concerne un procédé pour la réalisation d'une réaction chimique polyphasée comprenant la mise en contact d'au moins un réactif liquide avec au moins un réactif solide, cette mise en contact de réactif solide et de réactif liquide résultant éventuellement en la création de mousses et/ou de dépôts insolubles, dans un hydrocyclone introducteur (1) présentant une partie supérieure cylindrique (1') et une partie inférieure tronconique (1 "), ledit procédé comprenant l'introduction tangentielle du réactif liquide dans la partie supérieure cylindrique (1') de l'hydrocyclone introducteur (1) de manière à créer un vortex dans la partie inférieure tronconique (1") de l'hydrocyclone introducteur (1), ladite partie inférieure tronconique (1") présentant un volume résidentiel pour le vortex, et l'introduction du réactif solide dans l'hydrocyclone introducteur (1) se faisant à la surface interne du vortex pour former un mélange réactionnel, caractérisé en ce que le débit d'introduction du réactif liquide et le volume résidentiel pour le vortex sont tels que le temps de résidence du mélange réactionnel dans la partie inférieure tronconique (1") de l'hydrocyclone introducteur (1) varie de 0,3 à 2 secondes, de préférence de 0,5 à 1,6 secondes, et mieux est égal ou inférieur à 1 seconde.

L'invention concerne également un dispositif pour la mise en oeuvre du procédé selon l'invention.

## Description

L'invention concerne un procédé pour la réalisation d'une réaction chimique polyphasée de type liquide/solide avec ou sans dégagement immédiat de gaz. L'invention concerne également un dispositif comprenant deux hydrocyclones de géométrie adaptée à la mise en oeuvre dudit procédé.

Il est connu que dans la réalisation d'une réaction chimique polyphasée les conditions d'alimentation en réactifs de départ sont déterminantes pour atteindre la meilleure cinétique possible. En effet, ce sont les conditions d'alimentation en réactifs qui vont régir la mise en contact des réactifs, et par conséquent, le déplacement de l'équilibre réactionnel et la cinétique d'avancement de la réaction.

Par exemple, pour la mise en oeuvre d'une réaction de neutralisation d'un liquide acide usé contenant des métaux lourds par un réactif solide tel que du calcaire broyé, un des problèmes majeurs rencontrés est la formation intensive de mousse résultant de la formation immédiate de bulles de gaz au sein du mélange réactionnel. Un autre problème majeur rencontré est la difficulté technique d'introduire de façon continue, proportionnelle et simultanée les différents réactifs ceci afin d'assurer une totale homogénéité du mélange réactionnel avant son introduction dans le réacteur. En effet, il a été observé que lorsque le réactif solide est introduit dans le réactif liquide déjà présent dans le réacteur, le mélange réactionnel formé est inhomogène ce qui défavorise la cinétique d'avancement de la réaction. Un autre problème lié à la mise en oeuvre d'une réaction polyphasée telle que celle citée ci-dessus, réside dans la formation de dépôts solides, en l'occurrence dans la formation de sels métalliques.

Le brevet FR 2 858 315 décrit un dispositif adapté à la mise en oeuvre d'une réaction de neutralisation d'un liquide acide usé contenant des métaux lourds par une base solide telle que du carbonate de calcium. Le dispositif en question est un hydrocyclone de géométrie adaptée pour assurer en outre la continuité d'alimentation en réactifs liquide et solide, et pour permettre la destruction en continu des mousses liées au dégagement de dioxyde de carbone engendré par la mise en contact de l'acide avec le carbonate de calcium. L'hydrocyclone comporte une partie supérieure tronconique, une partie médiane cylindrique et une partie inférieure tronconique. Le réactif liquide acide est introduit de manière tangentielle dans la partie médiane cylindrique de l'hydrocyclone de manière à former un vortex dans la partie inférieure tronconique de l'hydrocyclone. Le réactif solide est introduit de manière gravitaire au sommet d'une tubulure verticale située dans la partie supérieure tronconique de l'hydrocyclone. Le vortex du réactif liquide entraîne ainsi en continu les particules de réactif solide pour former un mélange réactionnel homogène. La destruction en continu des mousses provoquées par le dégagement gazeux se fait lors de l'écoulement du vortex sur les parois de l'hydrocyclone, par la mise en contact du film mince liquide avec l'atmosphère inerte de l'hydrocyclone.

L'un des objectifs de la présente invention est d'améliorer la cinétique d'une réaction polyphasée, et en particulier celle d'une réaction entre au moins un réactif liquide et au moins un réactif solide avec, en particulier, un dégagement gazeux immédiat.

Le demandeur a mis au point un procédé et un dispositif qui permettent d'améliorer la cinétique d'une réaction polyphasée, et en particulier, d'éliminer efficacement les mousses liées au dégagement gazeux immédiat engendré par la mise en contact d'au moins un réactif liquide avec au moins un réactif solide. Le demandeur a découvert que lorsque le réactif solide est introduit dans un vortex du réactif liquide dans la partie tronconique d'un hydrocyclone, il faut que le temps de résidence du mélange réactionnel ainsi obtenu dans la partie tronconique de l'hydrocyclone soit inférieur à 3 secondes, et de préférence égal ou inférieur à 1 seconde. Ainsi, le mélange réactionnel est rapidement transférable dans un second hydrocyclone dont la surface interne est exploitée pour éliminer plus efficacement le dégagement gazeux. Cette élimination efficace du gaz est possible grâce à la réinjection d'une partie du mélange réactionnel au sommet du second hydrocyclone. En effet, la réinjection du mélange réactionnel permet d'une part d'abattre en continu les mousses et d'expulser les bulles de gaz hors du liquide, et d'autre part de former un film mince de mélange réactionnel sur toute la surface interne de la partie tronconique du second hydrocyclone favorisant ainsi un abattement continu et plus rapide des bulles de gaz. Le demandeur a en outre montré que l'utilisation de deux hydrocyclones distincts permet une élimination plus efficace du dégagement gazeux, et par conséquent une meilleure cinétique de réaction, par rapport à l'utilisation d'un seul hydrocyclone. Le demandeur a aussi montré que le contrôle des paramètres d'introductions des réactifs, tels que par exemple le débit d'introduction du réactif liquide, et le contrôle de la géométrie des hydrocyclones permettent d'optimiser la cinétique du procédé selon l'invention.

Le procédé selon l'invention a en outre pour avantages : (i) l'homogénéité du mélange réactionnel grâce à une alimentation continu et proportionnelle en réactifs, (ii) l'élimination de la gêne engendrée par la formation immédiate de mousse lors de la mise en contact du réactif liquide avec le réactif solide grâce à l'utilisation d'un second hydrocyclone et du contrôle du temps de résidence du mélange réactionnel dans le premier hydrocyclone (hydrocyclone dans lequel le mélange réactionnel est formé), (iii) une élimination plus efficace du dégagement gazeux grâce à l'utilisation de la surface interne d'un second hydrocyclone et au recyclage du milieu réactionnel au niveau de la formation des mousses.

L'invention concerne un procédé pour la réalisation d'une réaction chimique polyphasée comprenant la mise en contact d'au moins un réactif liquide avec au moins un réactif solide, cette mise en contact de réactif solide et de réactif liquide résultant éventuellement en la création de mousses et/ou de dépôts insolubles, dans un hydrocyclone introducteur présentant une partie supérieure cylindrique et une partie inférieure tronconique, ledit procédé comprenant l'introduction tangentielle du réactif liquide dans la partie supérieure cylindrique de l'hydrocyclone introducteur de manière à créer un vortex dans la partie inférieure tronconique de l'hydrocyclone introducteur, ladite partie inférieure tronconique présentant un volume résidentiel pour le vortex, et l'introduction du réactif solide dans l'hydrocyclone introducteur se faisant à la surface interne du vortex pour former un mélange réactionnel, caractérisé en ce que le débit d'introduction du réactif liquide et le volume résidentiel pour le vortex sont tels que le temps de résidence du mélange réactionnel dans la partie inférieure tronconique de l'hydrocyclone introducteur varie de 0,3 à 2 secondes, de préférence de 0,5 à 1,6 secondes, et mieux est égal ou inférieur à 1 seconde.

Dans un mode préféré de réalisation de l'invention, le mélange réactionnel est transféré de l'hydrocyclone introducteur à un hydrocyclone pré-réacteur.

Dans un autre mode préféré de réalisation de l'invention, la mise en contact du réactif liquide avec le réactif solide provoque un dégagement gazeux avec formation de mousses, l'élimination du gaz s'effectuant dans l'hydrocyclone pré-réacteur.

Dans un autre mode préféré de réalisation de l'invention, le mélange réactionnel contenu dans l'hydrocyclone pré-réacteur est transféré dans un réacteur.

Dans un mode avantageux de réalisation de l'invention, une partie du mélange réactionnel contenu dans le réacteur est recyclée et réinjectée tangentiellement dans la partie supérieure cylindrique de l'hydrocyclone pré-réacteur.

Dans un autre mode avantageux de réalisation de l'invention, la surface interne de la partie inférieure tronconique de l'hydrocyclone pré-réacteur située sous l'injection tangentielle du mélange réactionnel est 5 à 10 fois supérieure à la surface de la section droite du réacteur.

L'invention concerne également un hydrocyclone introducteur pour la mise en oeuvre du procédé de l'invention, ledit hydrocyclone comprenant une enveloppe externe présentant une partie supérieure cylindrique et une partie inférieure tronconique se terminant par une tubulure de sortie, l'enveloppe externe de la partie supérieure cylindrique comprend au moins un injecteur tangentiel pour un réactif liquide, et un dispositif tubulaire central coaxial pour l'introduction d'un réactif solide comportant un orifice de sortie pour délivrer le réactif solide à la surface interne d'un vortex du réactif liquide, ledit orifice de sortie étant situé à l'intérieur de la partie inférieure tronconique de l'enveloppe externe de l'hydrocyclone introducteur de manière à ce que pour un débit d'introduction donné du réactif liquide, le temps de résidence du mélange réactionnel du réactif liquide et du réactif solide dans la partie inférieure tronconique introducteur varie de 0,3 à 2 secondes, de préférence de 0,5 à 1,6 secondes, et mieux encore il est égal ou inférieur à 1 seconde.

Dans un mode préféré de réalisation de l'invention, l'injecteur tangentiel pour un réactif liquide fait un angle positif (γ) variant de 0 à 10°, de préférence de 5° à 7°, etypiquement de 6°, par rapport à un axe perpendiculaire à l'axe central de l'enveloppe externe de l'hydrocyclone introducteur.

Dans un autre mode préféré de réalisation de l'invention, la partie inférieure tronconique de l'enveloppe externe fait un angle θ variant de 70° à 85° par rapport à un axe perpendiculaire à l'axe central de l'enveloppe externe de l'hydrocyclone introducteur.

Dans un autre mode préféré de réalisation de l'invention, l'orifice de sortie du dispositif tubulaire central coaxial pour l'introduction d'un réactif solide est situé au droit du centre de la tubulure de sortie et à une distance variant de 5 à 10 cm au-dessus de la spire supérieure du vortex.

L'invention concerne également un hydrocyclone pré-réacteur pour la mise en oeuvre du procédé de l'invention, et destiné de préférence à être en connexion fluidique avec en amont un hydrocyclone introducteur et avec en aval un réacteur, ledit hydrocyclone pré-réacteur comprenant une enveloppe externe présentant une partie supérieure cylindrique et une partie inférieure tronconique, la partie supérieure cylindrique de l'enveloppe externe comprend en son sommet un orifice d'entrée pour un mélange réactionnel, et au moins un injecteur tangentiel, de préférence trois injecteurs tangentiels, de préférence situés dans un même plan transversal, pour l'introduction tangentielle d'une partie d'un mélange réactionnel issu du réacteur, la surface interne de la partie inférieure tronconique de l'hydrocyclone pré-réacteur située sous le ou les injecteur(s) tangentiel(s) étant 5 à 10 fois supérieure à la surface de la section droite du réacteur.

Dans un mode préféré de réalisation de l'invention, la partie supérieure cylindrique de l'enveloppe externe de l'hydrocyclone pré-réacteur comprend au moins une tubulure pour évacuer des dégagements gazeux vers l'extérieur de l'hydrocyclone pré-réacteur.

L'invention concerne également un dispositif pour la mise en oeuvre du procédé selon l'invention, caractérisé en ce qu'il comprend en communication fluidique dans l'ordre indiqué, un hydrocyclone introducteur selon l'invention, un hydrocyclone pré-réacteur selon l'invention et un réacteur.

Dans un mode préféré de réalisation de l'invention, le dispositif comprend un moyen de recyclage pour amener une partie d'un mélange réactionnel contenu dans le réacteur jusqu'à l'injecteur ou les injecteurs tangentiel(s) de l'hydrocyclone pré-réacteur.

Dans un autre mode préféré de réalisation de l'invention, le dispositif comprend un moyen de recyclage pour amener une partie d'un mélange réactionnel contenu dans le réacteur jusqu'à l'injecteur ou les injecteurs tangentiel(s) de l'hydrocyclone introducteur.

La suite de la description se fera en référence aux figures annexées qui représentent, respectivement :
- Figure 1, une coupe longitudinale d'un dispositif selon l'invention comprenant un hydrocyclone introducteur (1) et un hydrocyclone pré-réacteur (2) destiné à être relié à un réacteur ;
- Figure 2, une coupe longitudinale d'un hydrocyclone introducteur (1) et une coupe transversale dudit hydrocyclone au niveau de son injecteur tangentiel (1 d) pour un réactif liquide ;
- Figure 3, un vortex de réactif liquide dans la partie inférieure tronconique (1") de l'hydrocyclone introducteur (1) et un schéma du volume résidentiel du vortex pour le calcul du temps de résidence du mélange réactionnel dans la partie inférieure tronconique (1") de l'hydrocyclone introducteur (1) ;
- Figure 4, un exemple de dispositif selon l'invention avec des équipements optionnels ;
- Figure 5, le déplacement du centre (G) du vortex du réactif liquide lorsqu'une dépression est appliquée à la sortie de l'hydrocyclone introducteur (1) ; et
- Figure 6, un bilan de matières comparant deux réactions polyphasées de neutralisation d'un acide usé, l'une étant réalisée entre un réactif solide (calcaire broyé) et un réactif liquide (acide) dans le dispositif selon l'invention, et l'autre étant réalisée entre deux réactifs liquides (lait de chaux et acide) dans un dispositif traditionnel;
- Figure 7, une droite de modélisation du rapport αH/βH en fonction de la vitesse de sortie du réactif liquide d'un hydrocyclone introducteur (1) de géométrie donnée pour calculer le temps de résidence du mélange réactionnel dans la partie inférieure tronconique (1 ") dudit hydrocyclone introducteur (1).

De manière générale, le procédé selon l'invention comprend : (a) la mise en contact des réactifs pour la formation du mélange réactionnel dans un premier hydrocyclone nommé « hydrocyclone introducteur » (1), (b) le transfert du mélange réactionnel formé dans l'hydrocyclone introducteur vers un deuxième hydrocyclone nommé « hydrocyclone pré-réacteur » (2), (c) l'élimination des mousses et l'optimisation du dégagement gazeux, si existants, au niveau de l'hydrocyclone pré-réacteur (2), (d) le transfert du mélange réactionnel contenu dans l'hydrocyclone pré-réacteur (2) vers un réacteur, (e) le recyclage d'une partie du mélange réactionnel contenu dans le réacteur vers l'hydrocyclone pré-réacteur (2) et éventuellement vers l'hydrocyclone introducteur (1) au cours de l'introduction des réactifs et pendant la réaction. Dans des modes particuliers de réalisation, le procédé comprend des étapes supplémentaires optionnelles, comme par exemple la neutralisation du dégagement gazeux et la filtration des dépôts solides formés au sein du mélange réactionnel lors de la réaction. Une fois l'étape (a) engagée, les étapes (a), (b), (c), (d), et (e) se produisent en continu et de façon simultanée le temps de l'introduction totale des réactifs et/ou de l'arrêt de la réaction.

Par « réaction polyphasée » selon l'invention, on entend une réaction entre au moins un réactif liquide et au moins un réactif solide, avec de préférence un dégagement gazeux engendrant la formation de mousses.

Le procédé selon l'invention concerne de manière générale la synthèse des sels formés par la réaction entre un réactif solide et un réactif liquide, le réactif solide pouvant être basique (par exemple, les carbonates alcalino terreux) et le réactif liquide un acide minéral ou organique. A l'inverse, le réactif solide peut être acide (par exemples, l'acétyl salicylique ou sulfanilique) et le réactif liquide basique (par exemple, la lessive de soude).

Le procédé concerne en outre la dissociation de tous les minerais carbonatés, en particulier les alcalino-terreux (calcium, magnésium, baryum et strontium), et la synthèse des sels correspondants à partir de la réaction directe des minerais par attaque d'un acide minéral ou organique.

Un cas particulier de réaction est celui des phosphates carbonatés dont l'attaque directe par l'acide sulfurique peut conduire à la production d'acide phosphorique sans passer par l'étape préalable de calcination du phosphate tricalcique.

Selon un mode particulier de l'invention, le réactif liquide est un liquide aqueux acide comprenant au moins un acide minéral choisi parmi les acides suivants : acide chlorhydrique, acide nitrique, acide fluorhydrique, acide sulfurique, acide sulfo-chromique, acide chromique. Le liquide aqueux acide peut contenir une combinaison des acides minéraux listés ci-dessus. Le liquide aqueux acide peut contenir un métal lourd ou une combinaison de plusieurs métaux lourds, par exemple une combinaison de 2 à12 métaux lourds. Par « métaux lourds », on entend selon l'invention tous les métaux polluants dont on doit éviter la dispersion dans l'environnement, et plus particulièrement les métaux suivants: Cu, Ag, Sr, Zn, Cd, Hg, Al, Ti, Zr, Sn, Pb, V, Ta, As, Bi, Cr, Mo, W, Ta, Mn, Fe, Co, et Ni. Les métaux lourds se présentent en général, dans l'effluent liquide acide, sous la forme de sels avec les acides contenus dans le liquide aqueux acide à traiter.

Dans un mode particulier de l'invention, la réaction polyphasée est une réaction de traitement de tout fluide polluant contenant des métaux lourds, et en particulier de traitement des divers effluents industriels contenant des métaux lourds toxiques tels que le zinc, le nickel, le fer, l'étain, le cuivre ou encore l'aluminium. Le rejet de tels fluides sans élimination préalable des métaux lourds présentent un grand danger pour l'environnement du fait de leur toxicité, de leur persistance dans l'environnement où ils ne sont pas dégradés, et de leur caractère dispersible qui entraîne, avec le temps, la pollution de surfaces étendues, par exemple du fait de leur écoulement par infiltration avec l'eau de pluie.

Une réaction de traitement d'un fluide polluant acide contenant des métaux lourds comporte classiquement une étape de neutralisation par un réactif solide basique. Le réactif solide basique est par exemple l'hydroxyde de calcium [Ca(OH)₂] contenu dans le lait de chaux le lait de chaux étant obtenu par réaction de la chaux vive [CaO] avec de l'eau. De préférence, comme décrit dans le brevet FR 2858315, le réactif solide basique est un réactif solide anhydre contenant au moins 90% en poids d'au moins un carbonate de calcium ou de magnésium, comme réactif permettant à la fois de neutraliser l'acidité du liquide aqueux à traiter et de précipiter les métaux lourds contenus dans ledit liquide aqueux. Il est à noter que l'utilisation d'un tel réactif est à la fois économique et entraîne une pollution réduite de l'environnement, notamment par rapport au procédé classique utilisant le lait de chaux. En effet, l'utilisation d'un réactif solide anhydre contenant au moins 90% en poids d'au moins un carbonate de calcium ou de magnésium entraîne notamment une économie d'énergie fossile, la production d'un volume d'effluents liquides final réduit, et une diminution des rejets de dioxyde de carbone dans l'atmosphère par suppression de l'émission de dioxyde de carbone nécessitée par la production préalable d'oxyde de calcium à partir du calcaire à haute température.

Dans un mode de réalisation avantageux, le réactif solide anhydre cité ci-dessus comprend au moins 95% en poids, et de préférence au moins 98% en poids d'au moins un carbonate de calcium ou de magnésium. Par « réactif anhydre » selon l'invention, on entend un réactif qui comprend un pourcentage en poids d'eau inférieur à 3% du produit total dudit réactif, et de préférence inférieur à 1% du poids total dudit réactif.

Le carbonate de calcium ou de magnésium est de préférence choisi parmi les carbonates du type calcite ou aragonite, les carbonates de calcium et de magnésium tels que les dolomites, ou encore les carbonates de magnésium tels que les magnésites et leurs mélanges.

De préférence, le carbonate de calcium contenu dans le réactif solide anhydre consiste en du carbonate de calcium par exemple une calcite ou une dolomite.

De manière tout à fait préférée, le réactif solide anhydre consiste en de la calcite ou de la dolomite contenant au moins 90% en poids de carbonate de calcium.

De préférence le réactif solide pour la mise en oeuvre du procédé de l'invention a une granulométrie inférieure à 500µm, avantageusement inférieure à 300µm, préférentiellement inférieure à 200µm, et mieux encore inférieure à 100µm. De manière tout à fait préférée, la granulométrie du réactif solide varie de 1 à 100 µm.

Pour mesurer la valeur de granulométrie moyenne d'un réactif solide, l'homme du métier utilisera toute technique conventionnelle. Notamment, l'homme du métier peut avoir recours à une mesure de la granulométrie à laser avec un dispositif de comptage automatique du type Beckman Coulter® ou Malvern®.

La faible granulométrie du réactif solide permet que ce réactif se disperse complètement et très rapidement lors de la réalisation du milieu réactionnel. Par exemple, le réactif solide anhydre contenant un carbonate de calcium ou de magnésium est insoluble dans une solution aqueuse. On obtient alors un mélange réactionnel biphasé liquide/solide dans lequel les particules de réactif solide sont réparties de manière homogène.

Selon un mode de réalisation particulier, le réactif solide anhydre contenant un carbonate de calcium ou de magnésium contient en association, plusieurs, de préférence 2 ou 3 carbonate de calcium ou de magnésium distincts. A titre illustratif, le réactif solide anhydre consiste en une association entre un carbonate de calcium du type calcite et un carbonate de calcium du type aragonite. Selon un autre exemple illustratif, le réactif solide anhydre consiste en une association entre un carbonate de calcium du type calcite et un carbonate de magnésium du type dolomite. Selon encore un autre exemple illustratif, le réactif solide anhydre consiste en une association entre un carbonate de calcium du type calcite et un carbonate de magnésium du type magnésite.

Le précipité de métaux lourds obtenus lors de la réaction d'un liquide acide usé contenant un ou plusieurs métaux lourds et un réactif solide de type carbonate de calcium est principalement constitué, voire exclusivement constitué, de métaux lourds sous leur forme insoluble d'hydroxydes et éventuellement de carbonates neutres ou basiques.

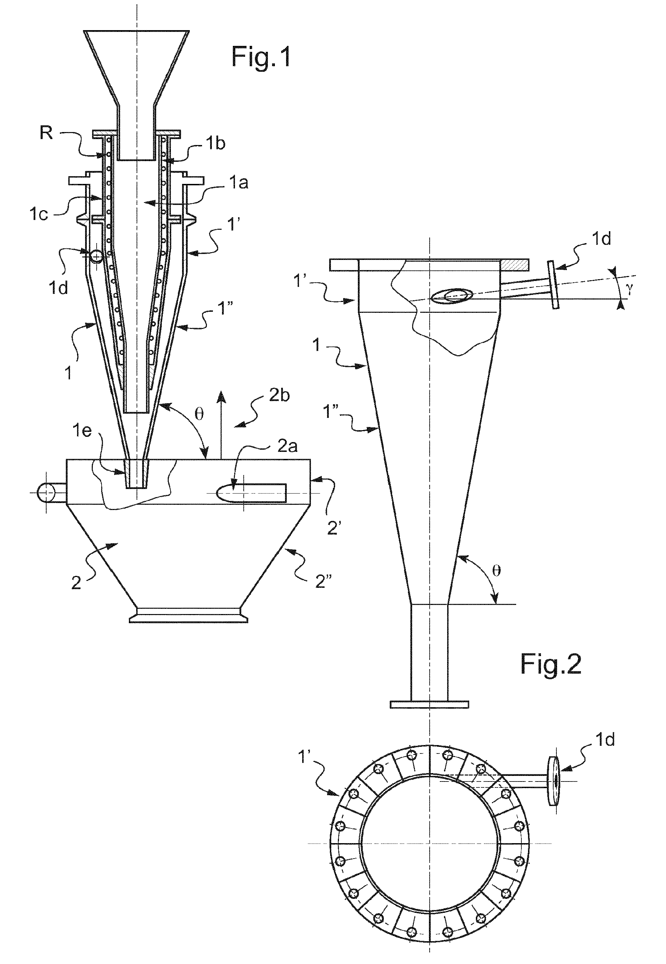

Selon le procédé de l'invention, la mise en contact d'au moins un réactif liquide avec au moins un réactif solide se fait dans un hydrocyclone introducteur (1). Les hydrocyclones sont bien connus par l'homme du métier. Ils sont couramment utilisés dans les étapes de séparation entre des gaz et des solides, ou encore pour le lavage des fumées. Dans la présente invention, la géométrie spécifique des hydrocyclones est exploitée pour mettre en oeuvre le procédé selon l'invention et optimiser la cinétique de la réaction polyphasée réalisée selon ce procédé. Une réalisation de l'hydrocyclone introducteur (1) selon l'invention est représentée schématiquement sur la figure 1. L'hydrocyclone introducteur (1) selon l'invention présente une partie supérieure cylindrique (1') et une partie inférieure tronconique (1 ").

Selon l'invention, l'introduction du réactif liquide dans l'hydrocyclone introducteur (1) se fait de manière à créer un vortex. De préférence, l'introduction du réactif liquide dans l'hydrocyclone introducteur (1) se fait de manière tangentielle en utilisant un ou plusieurs injecteurs tangentiels pour liquide positionnés dans la partie supérieure cylindrique (1') de l'hydrocyclone introducteur (1). Des exemples d'injecteur tangentiel pour un réactif liquide selon l'invention sont illustrés sur la figure 1 et sur la figure 2 par les objets notés (1d). Le (ou les) injecteurs tangentiels (1d) fait (font) en général un angle positif (γ) variant de 0 à 10°, de préférence de 5° à 7°, et typiquement de 6°, par rapport à un axe perpendiculaire à l'axe central de l'enveloppe externe de l'hydrocyclone introducteur (1).

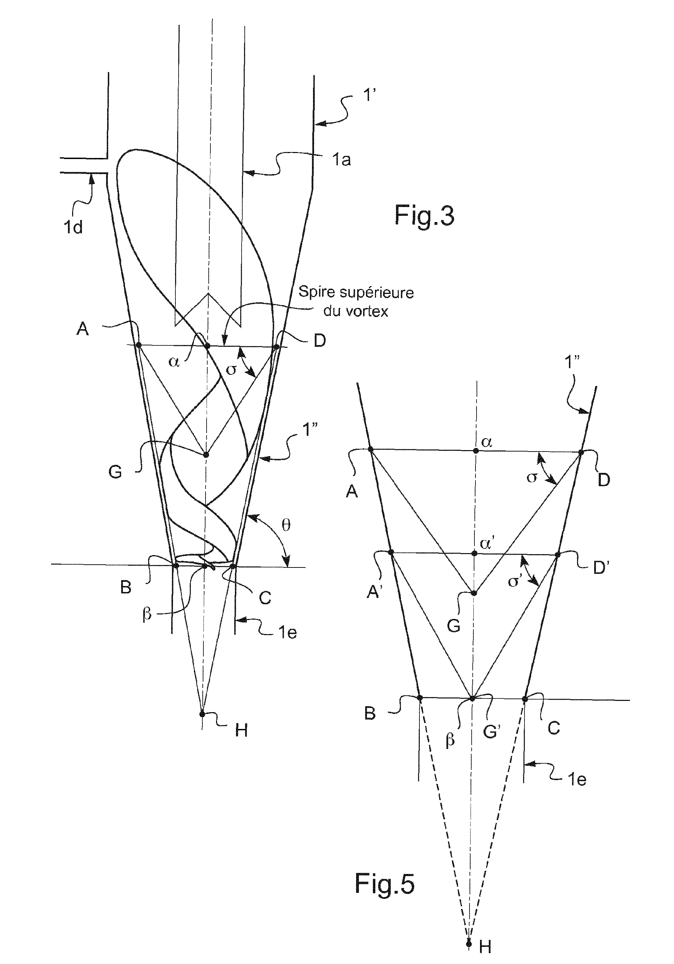

L'injection tangentielle du réactif liquide dans la partie supérieure (1') de l'hydrocyclone introducteur (1) crée ainsi un vortex dans la partie inférieure tronconique (1 ") de l'hydrocyclone introducteur (1). Le vortex formé par le réactif liquide est schématisé sur la figure 3, le point (G) correspondant au centre de ce vortex. Le vortex est formé par un film mince du réactif liquide injecté s'écoulant en spirale le long de la paroi interne de la partie inférieure tronconique (1 ") de l'hydrocyclone introducteur (1). L'épaisseur du film sous le(s) injecteur(s) (1 d) est typiquement inférieure à 5mm puis augmente jusqu'au centre (G) du vortex.

La partie inférieure tronconique (1") de l'enveloppe externe de l'hydrocyclone introducteur (1) fait un angle (θ) variant de 70° à 85°, et mieux encore il est de 0° par rapport à un axe perpendiculaire à l'axe central de l'hydrocyclone introducteur (1) (voir figure 2).

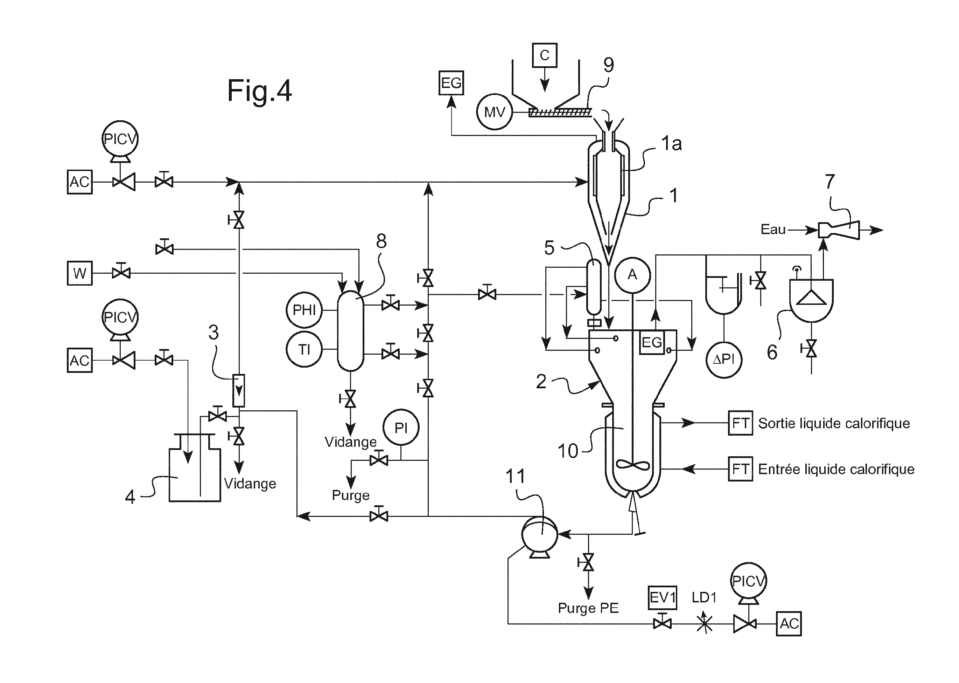

La vitesse et le débit d'introduction du réactif liquide sont modulables. Le débit est défini comme étant la vitesse d'introduction du réactif liquide multipliée par la surface de la section droite de l'injecteur. Le débit d'introduction du réactif liquide est ainsi modulable en faisant varier la vitesse d'introduction du réactif liquide et le diamètre de l'injecteur tangentiel pour ledit réactif liquide. A titre d'exemple, la vitesse d'introduction du réactif liquide, et par conséquent le débit d'introduction du réactif liquide, sont ajustables à l'aide d'un débimètre (figure 4, (3)) placé en amont de l'injecteur pour le réactif liquide, le réactif liquide étant contenu dans un flacon réservoir (figure 4, (4)) placé en amont du débimètre. De préférence, la vitesse d'introduction du réactif liquide est 20 à 50 fois, et mieux 25 à 40 fois supérieure à la vitesse de sortie du mélange réactionnel de l'hydrocyclone introducteur (1) vers l'hydrocyclone pré-réacteur (2). Il a été constaté que pour une réaction polyphasique et un hydrocyclone introducteur donnés, le débit d'introduction du réactif liquide peut varier de plus ou moins 25%.

Selon l'invention, le réactif solide qui est introduit dans l'hydrocyclone introducteur (1) entre en contact avec le réactif liquide à la surface interne du vortex pour former un mélange réactionnel.

De préférence, l'introduction du réactif solide dans l'hydrocyclone introducteur (1) se fait au sommet de l'hydrocyclone introducteur (1) par un orifice d'entrée d'un dispositif tubulaire (1 a) placé coaxialement au centre dudit hydrocyclone. Le dispositif tubulaire central coaxial (1 a) pour l'introduction du réactif solide est schématisé sur la figure 1. Le dispositif tubulaire (1 a) est placé de telle manière que le film créé par le réactif liquide s'écoule sur la paroi interne de la partie inférieure tronconique (1") de l'hydrocyclone introducteur (1), sans contact avec le dispositif tubulaire (1a).

L'orifice de sortie du dispositif tubulaire (1a), situé à l'extrémité du dispositif tubulaire (1a) opposée à l'orifice d'entrée, sert à délivrer le réactif solide à la surface interne du vortex formé par le réactif liquide. Cet orifice de sortie est situé de préférence au droit du centre (β) de la tubulure de sortie (1e) et à une distance variant de 5 à 10 cm au-dessus de la spire supérieure du vortex (figure 3). La spire supérieure du vortex se situe au niveau où le film du réactif liquide s'épaissit; elle est schématisée par le segment [AD] (figure 3). Par exemple, dans le cas d'un acide dilué tel que HNO3 5%, l'orifice de sortie du dispositif tubulaire (1a) se situe au droit du point (β) et à une distance de 5 cm au dessus du point (α), et dans le cas d'un acide concentré tel que HCl 30%, l'orifice de sortie du dispositif tubulaire (1a) se situe au droit du point (β) et à une distance de 10 cm au dessus du point (α). Le positionnement particulier de l'orifice de sortie du dispositif tubulaire (1a) permet d'éviter que les mousses ne remontent dans le dispositif tubulaire et/ou n'atteignent la sortie du réactif solide pulvérulent.

Dans un mode préféré de réalisation du procédé, le débit du réactif solide est régulé de préférence par une vis doseuse équipée d'un potentiomètre. Selon les caractéristiques physiques du solide, le débit du solide peut être régulé par tout système de mesure de débit de solides, par exemple par un transporteur à bande équipé d'une peseuse.

Dans un autre mode préféré de réalisation du procédé, le réactif solide est chauffé à une température telle que tout risque de colmatage dû à une éventuelle hygroscopie du solide soit évité. Dans le cas où le réactif solide est un carbonate de calcium tel que défini précédemment, la température de chauffage du réactif solide varie de 120 à 170°C, de préférence de 130 à 160°C, et mieux encore elle est de 150°C. Un mode de réalisation d'un dispositif tubulaire (1a) avec chauffage du réactif solide consiste en un dispositif tubulaire à double enveloppe comprenant une tubulure coaxiale centrale (1 b) à la surface externe de laquelle sont disposées des résistances chauffantes (R) et une enveloppe de protection externe (1 c) isolant les résistances chauffantes (R) et la tubulure centrale (1 b) du réactif liquide (voir figure 1). On pourrait également utiliser un dispositif tubulaire à double enveloppe avec un système de circulation de fluide calorifique.

Selon l'invention, le mélange réactionnel résultant de la mise en contact du réactif solide à la surface interne du vortex du réactif liquide est, après un certain temps de résidence dans la partie inférieure tronconique (1") de l'hydrocyclone introducteur (1), transféré dans un second hydrocyclone nommé « hydrocyclone pré-réacteur » (2). Selon l'invention, le temps de résidence du mélange réactionnel dans la partie inférieure tronconique (1 ") de l'hydrocyclone introducteur (1) varie de 0,3 à 2 secondes, de préférence, il varie de 0,5 à 1,6 secondes, et mieux encore il est égal ou inférieur à 1 seconde.

Le temps de résidence du mélange réactionnel dans la partie inférieure tronconique (1") de l'hydrocyclone introducteur (1) est un facteur déterminant pour éviter toute gêne provoquée par la formation immédiate de mousses et de dépôts insolubles.

L'homme du métier sait calculer ce temps de résidence à partir de données expérimentales et de la géométrie de l'hydrocyclone introducteur (1). En effet, ce temps de résidence du mélange réactionnel est égal au débit d'introduction du réactif liquide divisé par le « volume résidentiel pour le vortex ». Comme précisé précédemment, le débit d'introduction du réactif liquide est modulable et il est choisi par l'homme du métier en fonction de la nature de la réaction polyphasée et de la géométrie de l'hydrocyclone introducteur (1). « Le volume résidentiel pour le vortex » se situe dans la partie inférieure tronconique (1 ") de l'hydrocyclone introducteur (1). Ce volume qui est schématisé sur la figure 3 est égal au volume du tronc de cône ABCD moins le volume du cône AGD.

Sur la figure 3, le segment [AD] correspond au diamètre de la spire supérieure du vortex, la spire supérieure du vortex se situant au niveau où le film de réactif liquide s'épaissit. Ce niveau est clairement repérable à l'oeil nu par l'homme du métier. Le point α correspond au milieu du segment [AD]. Le segment [BC] correspond au diamètre de sortie de l'hydrocyclone introducteur (1), c'est-à-dire au diamètre de sortie de la partie inférieure tronconique (1") ou au diamètre de la tubulure de sortie (1 e) de l'hydrocyclone introducteur (1). Le point β correspond au milieu du segment [BC], le point H correspond au sommet virtuel de la partie inférieure tronconique (1") de l'hydrocyclone introducteur (1), et le point G correspond au centre du vortex. L'angle σ correspond à l'angle positif que forment le segment [AD] et le segment [DG]. L'angle θ correspond à l'angle positif que forme la partie inférieure tronconique (1") de l'enveloppe externe de l'hydrocyclone introducteur (1) par rapport à un axe perpendiculaire à l'axe central de l'hydrocyclone introducteur (1).

Le volume du tronc de cône ABCD est égal à (π/3)x(αβ)x[(Aα)²+(Aα)x(Bβ)+(Bβ)²] et le volume du cône AGD à (π/3)x(αG)x(Aα)². L'homme du métier sait calculer αβ, Aα, Bβ et αG à partir de la géométrie de l'hydrocyclone et de données expérimentales sur le vortex crée par le réactif liquide. En effet, l'homme du métier sait mesurer la distance αβ en repérant expérimentalement, par exemple visuellement, le niveau de la spire supérieure du vortex. L'homme du métier calcule Aα qui est égal à αH*(cos θ/sin θ), αH étant égale à la somme de αβ et de βH. L'homme du métier calcule βH qui est égal à Bβx(sin θ/cos θ), Bβ étant obtenu par la géométrie de l'hydrocyclone. Enfin, l'homme du métier repère expérimentalement, par exemple visuellement, le point G (centre du vortex) et mesure ainsi la distance αG. Les positions des points α et G peuvent être déterminées expérimentalement au moyen d'une règle graduée descendue centralement par un opérateur à l'intérieur de l'hydrocyclone introducteur (1) jusqu'au contact avec le réactif liquide du vortex.

Dans un mode avantageux de réalisation de l'invention, le rapport αH/βH varie de 1,5 à 2,5, de préférence de 2 à 2,5, et mieux encore il est de 2.

De manière avantageuse, le point G se situe au-dessous de l'orifice de sortie du dispositif tubulaire (1 a) et au-dessus de la tubulure de sortie (1 e) de l'hydrocyclone introducteur (1), c'est-à-dire au-dessus du segment [BC] (figure 3).

La position du centre (G) du vortex dépend en outre de la viscosité du réactif liquide, de la vitesse et du débit d'introduction du réactif liquide, et des éventuelles pertes de charges du réactif liquide au niveau de l'injecteur tangentiel (1 d). La position du centre (G) du vortex est donc modulable par l'homme du métier en jouant sur les paramètres cités ci-avant, et aussi en jouant sur la pression en sortie de l'hydrocyclone introducteur (1). Ainsi, en créant une dépression en sortie de l'hydrocyclone introducteur (1), l'homme du métier peut abaisser le point (G) en direction de la tubulure de sortie (1e) de l'hydrocyclone introducteur (1). La figure 5 schématise un tel phénomène. Le point G correspond à la position du centre du vortex à pression atmosphérique (1000cm CE (colonne d'eau)), et le point G' à la position du centre du vortex lorsqu'une dépression de - 40cm CE (pression=960cm CE) est créée en sortie de l'hydrocyclone (1). La position de la spire supérieure du vortex (AD puis A'D') suit le même déplacement que le point G. La création d'une dépression en sortie de l'hydrocyclone introducteur (1) résulte ainsi en un déplacement sensiblement transversal des points A, D, α et G en direction de la tubulure de sortie (1 e) de l'hydrocyclone introducteur (1). Pour une pression donnée, ce phénomène de translation des points A, D, α et G en direction de la tubulure de sortie (1e) de l'hydrocyclone introducteur (1) est aussi observable lorsqu'on diminue le débit d'introduction du réactif liquide.

En jouant sur les paramètres tels que le débit d'introduction du réactif liquide et la dépression créée en sortie de l'hydrocyclone introducteur (1), il est alors possible d'ajuster la position de la spire supérieure du vortex de telle sorte que cette spire soit située 5 à 10 cm en dessous de l'orifice de sortie du dispositif tubulaire (1a). Inversement, il est possible d'ajuster la position de l'orifice de sortie du dispositif tubulaire (1a) pour obtenir une telle distance par rapport à la spire supérieure du vortex. L'ajustement du centre (G) du vortex et/ou de l'orifice de sortie du dispositif tubulaire (1a) est particulièrement avantageux lorsque la mise en contact du réactif liquide avec le réactif solide engendre un dégagement gazeux se traduisant pas la formation immédiate de mousses. En effet, cet ajustement permet ainsi d'éviter que les mousses ne remontent dans le dispositif tubulaire et/ou n'atteignent la sortie du réactif solide pulvérulent.

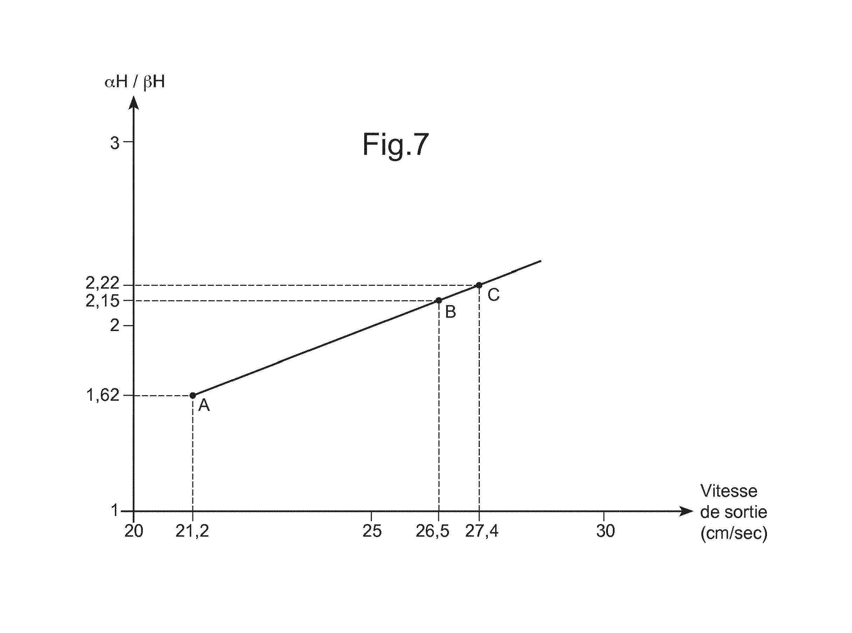

Une autre conséquence liée au fait que la modulation des paramètres tels que le débit d'introduction du réactif liquide et la dépression créée en sortie de l'hydrocyclone introducteur (1) influent sur la position des points A, D, α et G est qu'il est possible, pour une géométrie donnée d'hydrocyclone introducteur (1), de modéliser cette relation de cause à effet, et d'utiliser cette modélisation pour prédire par calcul le temps de résidence du mélange réactionnel dans la partie inférieure tronconique (1 ") de l'hydrocyclone introducteur (1). Par exemple, pour une géométrie donnée d'hydrocyclone introducteur (1) et une pression donnée en sortie de l'hydrocyclone introducteur (1), les positions des points A, D, α et G se déplacent de façon sensiblement transversale avec la variation du débit d'introduction du réactif liquide. La valeur de l'angle σ quant à elle reste quasi constante, et les positions des points H et β ne changent pas. La vitesse de sortie du réactif liquide de l'hydrocyclone introducteur (1) étant liée au débit d'introduction du réactif liquide, il est possible de tracer une droite de modélisation avec pour abscisse la vitesse de sortie du réactif liquide de l'hydrocyclone introducteur (1) et pour ordonnée, le rapport αH/βH (Figure 7). Ainsi pour une géométrie donnée d'hydrocyclone introducteur (1) et pour un débit donné d'introduction du réactif liquide, l'homme du métier pourra à partir de cette droite, calculer le temps de résidence du liquide dans la partie inférieure tronconique (1") de l'hydrocyclone introducteur (1). En effet, pour un angle θ de 80°, βH est égal à βB x (sin80/cos80). Connaissant βB de part la géométrie de l'hydrocyclone introducteur, l'homme du métier calcule βH puis obtient la valeur de αH à partir de la droite de modélisation. Connaissant αH, l'homme du métier calcule Aα qui est égal à αH x (cos80/sin80). L'angle σ étant constant et égal à 62°, l'homme du métier cacul ensuite αG qui est égal à Aα x (sin62/cos62). Il calcule aussi αβ qui est égal à αH - βH. Ainsi, l'homme du métier possède toutes les valeurs pour calculer les volumes du tronc de cône ABCD et du cône AGD, et par conséquent pour calculer le volume résidentiel et le temps de résidence du mélange réactionnel dans partie inférieure tronconique (1 ") de l'hydrocyclone introducteur (1). Il est à noter qu'il est possible d'intégrer à la droite de modélisation l'effet d'une dépression créée en sortie de l'hydrocyclone introducteur (1) sur le temps résidentiel, par exemple en diminuant de 1 cm la valeur de αH par cm de CE (colonne d'eau) de dépression.

Le temps de chargement des réactifs liquide(s) et solide(s) selon le procédé de l'invention correspond au temps de la réaction polyphasée ce qui est un avantage par rapport aux procédés classiques. En effet, selon le procédé de l'invention les réactifs peuvent être introduits de façon simultanée alors que selon les procédés classiques le chargement des réactifs se fait en deux étapes (liquide d'abord et solide ensuite). Selon le procédé de l'invention, le temps de chargement est par exemple moins de deux heures pour des réacteurs de 10 à 20m³, moins de trois heures pour des réacteurs de 20 à 30m³ et moins de quatre heures pour des réacteurs de 30 à 40m³.

Le transfert du mélange réactionnel de l'hydrocyclone introducteur (1) dans l'hydrocyclone pré-réacteur (2) est assuré par le vortex du réactif liquide qui joue le rôle d'une pompe naturelle refoulant ainsi le mélange réactionnel vers le bas de la partie inférieure tronconique (1 ") de l'hydrocyclone introducteur (1). Les dépôts solides sont aussi refoulés. Un exemple d'hydrocyclone pré-réacteur adapté pour la mise en oeuvre du procédé selon l'invention est schématisé sur la figure 1 par l'objet noté (2). La sortie du mélange réactionnel de l'hydrocyclone introducteur (1) s'effectue théoriquement au niveau de l'orifice de sortie (1 e). L'hydrocyclone pré-réacteur (2) selon l'invention comporte un orifice d'entrée en connexion fluidique avec la tubulure de sortie (1e) de l'hydrocyclone introducteur (1) permettant ainsi le transfert du mélange réactionnel de l'hydrocyclone introducteur (1) vers l'hydrocyclone pré-réacteur (2). L'hydrocyclone introducteur (1) est donc placé classiquement en amont de l'hydrocyclone pré-réacteur (2). De préférence, l'hydrocyclone pré-réacteur (2) comprend une partie supérieure cylindrique (2') et une partie inférieure tronconique (2"), et le mélange réactionnel est alors transféré depuis l'hydrocyclone introducteur (1) dans la partie supérieure cylindrique (2') de l'hydrocyclone pré-réacteur (2). Dans un mode préféré de réalisation, la tubulure de sortie (1e) de l'hydrocyclone introducteur (1) pénètre dans l'hydrocyclone pré-réacteur (2), la longueur de pénétration de la tubulure de sortie (1e) représentant typiquement 40 à 60% de la hauteur totale de l'hydrocyclone pré-réacteur (2).

Selon l'invention, le mélange réactionnel contenu dans l'hydrocyclone pré-réacteur (2) est transféré dans un réacteur. De préférence, l'hydrocyclone pré-réacteur (2) présente, au niveau de l'extrémité de sa partie inférieure tronconique (2"), un orifice de sortie du mélange réactionnel qui est en connexion fluidique avec l'orifice d'entrée du réacteur.

Dans un mode de réalisation avantageux, une partie du mélange réactionnel contenu dans le réacteur est réinjectée tangentiellement dans la partie supérieure cylindrique (2') de l'hydrocyclone pré-réacteur (2), de préférence au niveau du ou des injecteur(s) tangentiel(s) (2a), et/ou dans la partie supérieure cylindrique (1') de l'hydrocyclone introducteur (1), de préférence au niveau du ou des injecteur(s) tangentiel(s) (1 d). L'hydrocyclone pré-réacteur (2) comporte au moins un injecteur tangentiel (2a), et de préférence trois injecteurs tangentiels (2a) positionnés dans sa partie supérieure cylindrique (2'). La réinjection d'une partie du mélange réactionnel contenu dans le réacteur vers les hydrocyclones (1) et (2) se fait classiquement dès lors que le réacteur est rempli en mélange réactionnel au tiers de sa capacité.

La réinjection d'une partie du mélange réactionnel se fait de préférence du réacteur vers l'hydrocyclone introducteur (1) et vers l'hydrocyclone pré-réacteur (2) le temps de l'introduction complète des réactifs, puis préférentiellement vers l'hydrocyclone pré-réacteur (2) lorsque l'introduction complète des réactifs est achevée. Lorsque la réaction du réactif liquide avec le réactif solide engendre la formation de quantités importantes de mousses (cas par exemple de l'attaque du calcaire par de l'acide concentré HCl à 38%), le système de recyclage du mélange réactionnel permet d'atténuer cette formation massive de mousse en contrôlant l'introduction des réactifs. En effet, il est dans ce cas avantageux d'alimenter par défaut le réactif solide basique (le calcaire) pour former moins de mousse, puis de recycler le bain réactionnel naissant dont le pH est inférieur à 1 vers l'hydrocyclone (1) pour compléter l'introduction du réactif solide basique.

Un exemple de moyen pour mettre en oeuvre le recyclage d'une partie du mélange réactionnel du réacteur vers les hydrocyclones introducteur (1) et pré-réacteur (2) est l'utilisation d'une pompe, de préférence une pompe à membrane. L'homme du métier sait quel type de pompe utiliser en fonction de la nature de la réaction polyphasée mise en oeuvre dans lesdits hydrocyclones et réacteur.

L'équilibre des débits au niveau des différents injecteurs tangentiels (2a) se fait à l'aide d'un réservoir tampon (5) (figure 4) recevant la totalité du débit de mélange réactionnel recyclé et dont les tubulures de sortie vers les différents injecteurs sont, comme cela est bien connu, conçues pour équilibrer les pertes de charge des circuits en aval.

Le débit de recyclage du mélange réactionnel est choisi en fonction du volume du réacteur. Ce débit est par exemple de 5m³ par heure pour un réacteur de 20m³ (soit un taux de renouvellement du mélange réactionnel de 4 heures), et de 40m³ par heure (soit un taux de renouvellement de 1,5 heures) pour un réacteur de 60m³.

Dans un mode particulier de l'invention, la mise en contact du réactif liquide avec le réactif solide provoque un dégagement gazeux avec formation de mousses, l'élimination du gaz s'effectuant dans l'hydrocyclone pré-réacteur (2).

La nature du dégagement gazeux dépend de la nature des réactifs liquide(s) et solide(s). Ce dégagement gazeux est par exemple un dégagement de dioxyde de carbone, d'ammoniac, ou de dioxyde de soufre. Dans le cas de la réaction d'un liquide acide contenant des métaux lourds, avec une base solide telle que le carbonate de calcium ou de magnésium, le dégagement gazeux est de préférence du dioxyde de carbone.

Par « élimination du gaz » selon l'invention, on entend de façon générale l'expulsion des gaz contenus dans les mousses de mélange réactionnel vers l'extérieur de l'enceinte dans laquelle le mélange réactionnel est contenu, soit en l'occurrence vers l'extérieur de l'hydrocyclone pré-réacteur (2) au moyen par exemple d'une ou de plusieurs tubulures (2b) (figure 1). Les tubulures (2b) sont avantageusement reliées à un système permettant de créer une dépression, telle une pompe à vide ou un éjecteur ou encore un ventilateur, pour faciliter l'expulsion du gaz vers l'extérieur de l'hydrocyclone.

Dans le cas d'une réaction polyphasée engendrant un dégagement gazeux avec formation de mousses, la réinjection d'une partie du mélange réactionnel dans la partie supérieure cylindrique (2') de l'hydrocyclone pré-réacteur (2) a pour avantage d'accélérer la cinétique de la réaction polyphasée par une élimination plus efficace et plus rapide des bulles de gaz. En effet, la réinjection d'une partie du mélange réactionnel dans la partie supérieure cylindrique (2') de l'hydrocyclone pré-réacteur (2) permet de créer un film mince de liquide qui en s'écoulant sur la paroi interne de l'hydrocyclone pré-réacteur (2) abaisse fortement la tension superficielle des bulles de gaz et empêche leur développement. Ce phénomène appelé ci-après « abattement des mousses » permet aussi l'expulsion des gaz hors du mélange réactionnel.

Selon l'invention, la surface interne de la partie inférieure tronconique (2") de l'hydrocyclone pré-réacteur (2) est exploitée pour contenir les mousses formées par le dégagement gazeux, et aussi pour favoriser le dégagement des bulles de gaz expulsées hors des mousses suite à leur abattement par le mélange réactionnel recyclé. En effet, la surface interne de la partie inférieure tronconique (2") de l'hydrocyclone pré-réacteur (2) offre une large surface permettant la formation d'un film mince et facilitant ainsi le dégagement des gaz expulsés hors des mousses.

Dans un mode préféré de l'invention, la surface interne de la partie inférieure tronconique (2") de l'hydrocyclone pré-réacteur (2) située sous le ou les injecteur(s) tangentiel(s) (2a) est 5 à 10 fois supérieure à la surface de la section droite du réacteur destiné à être en connexion fluidique avec l'hydrocyclone pré-réacteur (2) (voir figure 1).

L'intérêt majeur d'éliminer le dégagement gazeux qui est un produit de réaction est de déplacer l'équilibre réactionnel dans le sens de la formation des produits, et donc de favoriser la cinétique de la réaction. En effet, le départ en continu d'un des produits de la réaction améliore la cinétique de la réaction. Par conséquent, la cinétique de la réaction est meilleure lorsque l'élimination du gaz se fait au fur et à mesure de sa formation.

Comme mentionné précédemment, un des avantages du procédé selon l'invention est que l'élimination du gaz se fait dans un hydrocyclone autre que l'hydrocyclone introducteur ce qui permet d'éviter toute gêne provoquée par la formation immédiate de mousses dues à la présence de bulles de gaz dans le mélange réactionnel.

Un autre avantage du procédé selon l'invention est que l'élimination du gaz se fait au fur et à mesure de sa formation, et que cette élimination est meilleure lorsqu'elle est réalisée dans un hydrocyclone autre que l'hydrocyclone introducteur. Le degré d'efficacité de l'élimination du gaz dépend toutefois de la géométrie de l'hydrocyclone pré-réacteur.

Le procédé selon l'invention comporte des étapes optionnelles aux étapes (a), (b), (c), (d), (e) définies précédemment. Ces étapes dépendent de la nature de la réaction polyphasée choisie. Parmi ces étapes optionnelles figurent, par exemple, la neutralisation du dégagement gazeux lorsque celui-ci est acide ou basique, le contrôle du pH et de la température du mélange réactionnel, et la filtration du mélange réactionnel dans le cas de la formation de dépôts solides. Les dégagements gazeux du réacteur sont neutralisés par exemple dans le bac (6) (figure 4), l'aspiration étant assurée par un éjecteur à eau (7) (figure 4) et la dépression étant de l'ordre de - 200mm CE (colonne d'eau). Le pH et la température du mélange réactionnel recyclé sont contrôlés par exemple au niveau du ballon (8) (figure 4).

L'invention concerne également un hydrocyclone introducteur (1) pour la mise en oeuvre du procédé selon l'invention. Plus précisément, l'hydrocyclone introducteur (1) est destiné à mettre en oeuvre l'introduction des réactifs du procédé selon l'invention, la mise en contact des réactifs pour la formation du mélange réactionnel, le transfert du mélange réactionnel dans un second hydrocyclone, nommé hydrocylone pré-réacteur, et l'injection d'une partie du mélange réactionnel en provenance du réacteur. En outre, l'hydrocyclone introducteur (1) peut être pourvu de moyens spécifiques pour réaliser des étapes optionnelles du procédé selon l'invention.

Un exemple d'hydrocyclone introducteur (1) selon un mode de réalisation de l'invention est schématisé en coupe longitudinale sur la figure 1. L'hydrocyclone introducteur (1) comprend une enveloppe externe présentant une partie supérieure cylindrique (1') et une partie inférieure tronconique (1 ") se terminant par une tubulure de sortie (1 e).

L'enveloppe externe de l'hydrocyclone introducteur (1) est constituée par n'importe quel matériau compatible avec la réaction chimique destinée à être réalisée dans ledit hydrocyclone. Le matériau doit aussi être compatible avec les techniques classiques de moulage bien connues de l'homme du métier. Le matériau pour fabriquer l'enveloppe externe de l'hydrocyclone introducteur (1) est par exemple, un métal (de l'acier carbone, des alliages spéciaux de type Hastelloy B ou Uranus B6) du verre, du graphite, ou du plastique (chlorure de polyvinyl ou polytétrafluoroéthylène (PTFE) par exemples).

Lors de son utilisation pour la mise en oeuvre du procédé selon l'invention (voir figure 1), l'hydrocyclone introducteur (1) est destiné à être positionné verticalement selon son axe central, la partie supérieure cylindrique (1') étant placée vers le haut, et la partie inférieure tronconique (1") vers le bas. L'hydrocyclone introducteur (1) est destiné à être placé en amont d'un deuxième hydrocyclone, nommé hydrocyclone pré-réacteur (2). La tubulure de sortie (1e) de l'hydrocyclone introducteur (1) qui est dans le prolongement de la partie inférieure tronconique (1") dudit hydrocyclone (1) est destinée à être en connexion fluidique avec l'hydrocyclone pré-réacteur (2). Dans un mode préféré de réalisation, la tubulure de sortie (1e) de l'hydrocyclone introducteur (1) plonge dans l'hydrocyclone pré-réacteur (2), la longueur de pénétration représentant typiquement 40 à 60% de la hauteur totale de l'hydrocyclone pré-réacteur (2).

La partie inférieure tronconique (1") de l'enveloppe externe fait un angle (θ) variant de préférence de 70° à 85°, et mieux encore il est de 80° par rapport à un axe perpendiculaire à l'axe central de l'enveloppe externe de l'hydrocyclone introducteur (1). L'angle (θ) est une des caractéristiques géométriques de l'hydrocyclone qui, selon le procédé de l'invention, influe sur la formation d'un film mince du réactif liquide après son introduction, et aussi sur le temps de résidence du mélange réactionnel dans la partie inférieure tronconique (1 ") de l'hydrocyclone introducteur (1).

Selon l'invention, l'enveloppe externe de la partie supérieure cylindrique (1') de l'hydrocyclone introducteur (1) comprend au moins un injecteur tangentiel (1d) pour un réactif liquide. Dans des modes particuliers de réalisation, l'enveloppe externe de la partie supérieure cylindrique (1') de l'hydrocyclone introducteur (1) comprend 1, 2, 3, 4, 5, ou 6 injecteurs tangentiels pour un réactif liquide.

Selon l'invention, l'injecteur tangentiel (1 d) pour un réactif liquide fait un angle positif (γ) variant de 0 à 10°, de préférence de 5° à 7°, et typiquement de 6°, par rapport à un axe perpendiculaire à l'axe central de l'enveloppe externe de l'hydrocyclone introducteur (1) (voir figure 2).

L'injecteur tangentiel (1d) selon l'invention est constitué de n'importe quel matériau compatible avec le réactif liquide destinée à être introduit dans l'hydrocyclone introducteur (1). De préférence, il est constitué du même matériau que celui de l'enveloppe externe de l'hydrocyclone (1). Le diamètre intérieur d'un injecteur tangentiel (1 d) est tel que pour un débit donné d'introduction du réactif liquide, la vitesse de sortie du mélange réactionnel soit comprise entre 6 et 7m/sec pour des réacteurs de 5 à 40m³.

Dans un mode particulier de réalisation, l'injecteur tangentiel (1d) est relié à un système de contrôle du débit du réactif liquide destiné à être introduit par ledit injecteur. Le système de contrôle du débit du réactif liquide est constitué par exemple d'un débitmètre.

L'enveloppe externe de la partie supérieure cylindrique (1') de l'hydrocyclone introducteur (1) comprend un dispositif tubulaire central coaxial (1a) pour l'introduction d'un réactif solide, de préférence un réactif solide selon le procédé de l'invention. Un exemple de dispositif tubulaire coaxial (1a) selon un mode de réalisation de l'invention est schématisé sur la figure 1.

Le dispositif central coaxial (1a) comprend un orifice d'introduction du réactif solide situé de préférence au sommet de la partie supérieure cylindrique (1') de l'hydrocyclone introducteur (1), et un orifice de sortie pour délivrer le réactif solide à la surface interne d'un vortex du réactif liquide. Ledit orifice de sortie est de préférence situé à l'intérieur de la partie inférieure tronconique (1 ") de l'enveloppe externe de l'hydrocyclone introducteur (1) de manière à ce que pour un débit d'introduction donné du réactif liquide, le temps de résidence du mélange réactionnel du réactif liquide et du réactif solide dans la partie inférieure tronconique (1 ") varie de 0,3 à 2 secondes, de préférence de 0,5 à 1,6 secondes, et mieux encore il est égal ou inférieur à 1 seconde. L'introduction du réactif solide se fait de préférence de manière gravitaire.

Dans un mode avantageux de réalisation, l'orifice de sortie du dispositif tubulaire (1 a) est situé au droit du centre (β) de la tubulure de sortie (1 e) et à une distance variant de 5 à 10 cm au-dessus de la spire supérieure du vortex (figure 3).

Selon l'invention, le dispositif tubulaire central coaxial (1 a) est destiné à être utilisé pour introduire le réactif solide du procédé selon l'invention. Les parois internes dudit dispositif tubulaire sont donc constituées par n'importe quel matériau compatible avec ledit réactif solide. Par exemple, pour l'introduction de carbonate de calcium ou de magnésium, les parois internes du dispositif tubulaire coaxial sont en acier, de préférence en acier poli au grain « miroir », c'est-à-dire au grain le plus fin possible après polissage.

Dans un mode particulier de réalisation de l'invention, une vis doseuse équipée d'une trémie et d'un potentiomètre sont placés en amont du dispositif tubulaire central coaxial (1a) afin de contrôler le débit d'introduction dudit réactif solide. Dans un mode particulier de réalisation de l'invention, le dispositif tubulaire central coaxial (1a) pour l'introduction du réactif solide est équipé d'un système de chauffage, qui est par exemple, constitué de résistances électriques (R) (figure 1). Le système de chauffage est adapté en fonction de la température souhaitée, et donc en fonction du réactif solide. Par exemple, dans le cas d'une réaction de neutralisation d'un liquide acide par du carbonate de calcium, les parois de la tubulure coaxiale centrale (1 b) sont de préférence chauffées à 150°C. Pour ce faire, le système de chauffage du dispositif tubulaire (1a) est par exemple constitué de résistances électriques pouvant atteindre au minimum 150°C. Dans la réalisation représentée sur la figure 1, le dispositif tubulaire (1a) avec chauffage consiste en un dispositif tubulaire à double enveloppe comprenant une tubulure coaxiale centrale (1b) à la surface externe de laquelle sont disposées des résistances chauffantes (R) et une enveloppe de protection externe (1c) isolant les résistances chauffantes (R) et la tubulure coaxiale centrale (1b) du réactif liquide (voir figure 1). On pourrait également utiliser un dispositif tubulaire à double enveloppe avec un système de circulation de fluide calorifique.

L'enveloppe protectrice (1 c) peut être utilisée qu'il y ait ou non un dispositif de chauffage, pour réduire les risques de corrosion. Un exemple d'enveloppe protectrice contre la corrosion est une enveloppe en polytétrafluoroéthylène (PTFE), et de préférence une double enveloppe en PTFE. L'enveloppe protectrice (1 c) entoure extérieurement la tubulure centrale (1 b). Le rôle principal de l'enveloppe protectrice (1c) est de protéger la tubulure centrale (1 b) et tous ses équipements optionnels, tels que les résistances chauffantes (R), d'une attaque chimique telle que la corrosion, en particulier lorsque le réactif liquide est un acide fort et que l'atmosphère gazeuse ambiante contient des produits tels que les anhydrides d'acides.

L'invention concerne également un hydrocyclone pré-réacteur (2), notamment pour la mise en oeuvre du procédé selon l'invention. L'hydrocyclone pré-réacteur (2) est généralement destiné à être placé en aval de l'hydrocyclone introducteur (1) et en amont d'un réacteur. Plus précisément, l'hydrocyclone pré-réacteur (2) s'avère particulièrement performant pour l'élimination du dégagement gazeux et des mousses éventuellement produites par la mise en contact des réactifs du procédé selon l'invention. L'hydrocyclone pré-réacteur (2) est également équipé de moyens pour recevoir un mélange réactionnel recyclé à partir du réacteur comme décrit dans le procédé de l'invention. L'hydrocyclone (2) est en général destiné à recevoir un mélange réactionnel immédiatement après sa formation dans l'hydrocyclone introducteur (1) et est utilisé pour transférer ce mélange réactionnel vers un réacteur. En outre, l'hydrocyclone pré-réacteur (2) peut être pourvu de moyens spécifiques pour réaliser des étapes optionnelles du procédé selon l'invention.

Un exemple d'hydrocyclone pré-réacteur (2) selon un mode de réalisation de l'invention est schématisé en coupe longitudinale sur la figure 1. L'hydrocyclone (2) comprend une enveloppe externe présentant une partie supérieure cylindrique (2') et une partie inférieure tronconique (2").

L'enveloppe externe de l'hydrocyclone pré-réacteur (2) est constituée par n'importe quel matériau compatible avec la réaction chimique destinée à être réalisée dans ledit hydrocyclone. Le matériau doit aussi être compatible avec les techniques classiques de moulage bien connues de l'homme du métier. Le matériau pour fabriquer l'enveloppe externe de l'hydrocyclone introducteur (1) est par exemple, un métal (de l'acier carbone, des alliages spéciaux de type Hastelloy B ou Uranus B6) du verre, du graphite, ou du plastique (chlorure de polyvinyl ou polytétrafluoroéthylène (PTFE) par exemples).

Lors de son utilisation pour la mise en oeuvre du procédé selon l'invention (voir figure 1), l'hydrocyclone pré-réacteur (2) est destiné à être positionné verticalement selon son axe central, la partie supérieure cylindrique (2') étant placée vers le haut, et la partie inférieure tronconique (2") vers le bas. L'hydrocyclone pré-réacteur (2) est destiné à être placé en aval de l'hydrocyclone introducteur (1) et en amont d'un réacteur, et en connexion fluidique avec ceux-ci.

La partie supérieure cylindrique (2') de l'enveloppe externe de l'hydrocyclone (2) comprend en son sommet un orifice d'entrée pour un mélange réactionnel, de préférence pour le mélange réactionnel crée dans l'hydrocyclone introducteur (1) selon le procédé de l'invention, c'est-à-dire le mélange réactionnel refoulé par le vortex du réactif liquide et sortant par la tubulure de sortie (1 e) de l'hydrocyclone (1).

La partie inférieure tronconique (2") de l'enveloppe externe de l'hydrocyclone (2) comprend un orifice de sortie destiné à être en connexion fluidique avec un réacteur. De préférence, ledit orifice est positionné à l'extrémité de la partie inférieure tronconique (2") de l'hydrocyclone pré-réacteur (2).

La partie supérieure cylindrique (2') de l'enveloppe externe comprend au moins un injecteur tangentiel (2a), de préférence trois injecteurs tangentiels (2a), pour l'introduction tangentielle d'une partie d'un mélange réactionnel issu du réacteur, comme décrit précédemment dans le procédé selon l'invention.

Dans des modes particuliers de réalisation, la partie supérieure cylindrique (2') de l'enveloppe externe de l'hydrocyclone (2) comprend 4, 5, ou 6 injecteurs tangentiels (2a) pour liquide.

Le rôle principal d'un injecteur tangentiel (2a) est de permettre l'injection d'une partie du mélange réactionnel qui est recyclée à partir du réacteur placé en aval de l'hydrocyclone pré-réacteur (2), les avantages d'un tel recyclage ayant été décrit précédemment dans le procédé selon l'invention.

Un injecteur tangentiel (2a) selon l'invention fait de préférence un angle de 0° par rapport à un axe perpendiculaire à l'axe central de l'hydrocyclone pré-réacteur (2).

Un injecteur tangentiel (2a) selon l'invention est constitué par n'importe quel matériau compatible avec le liquide destinée à être introduit dans l'hydrocyclone pré-réacteur (2). De préférence, il est constitué par le même matériau que celui de l'enveloppe extérieure de l'hydrocyclone pré-réacteur (2).

Le liquide destiné à être introduit dans l'hydrocyclone pré-réacteur (2) par un injecteur tangentiel (2a) est de préférence le mélange réactionnel recyclé à partir du réacteur comme précisé dans le procédé de l'invention.

Dans un mode particulier de réalisation, un injecteur tangentiel (2a) selon l'invention est relié à un système de contrôle du débit du liquide destiné à être introduit par le dit injecteur. En cas de multiples injecteurs tangentiels (2a) une capacité équipée de tubulures et de vannes de réglages permet d'équilibrer les pertes de charge dues à la distribution inégale vers les injecteurs tangentiels (2a).

Dans un mode avantageux de réalisation de l'invention, la surface interne de la partie inférieure tronconique (2") de l'hydrocyclone pré-réacteur (2) située sous le ou les injecteur(s) tangentiel(s) (2a) est 5 à 10 fois supérieure à la surface de la section droite du réacteur.

Dans un autre mode avantageux de réalisation de l'invention, la partie supérieure cylindrique (2') de l'enveloppe externe comprend au moins une tubulure (2b) pour évacuer des dégagements gazeux vers l'extérieur de l'hydrocyclone pré-réacteur (2). Typiquement la tubulure (2b) est reliée à un système permettant de créer une dépression, telle une pompe à vide. Dans un cas particulier de réalisation, la tubulure (2b) peut être reliée à un système de neutralisation du dégagement gazeux lorsque celui-ci est acide ou basique.

L'invention concerne également un dispositif (voir figure 1) pour la mise en oeuvre du procédé selon l'invention, le dispositif étant en communication fluidique dans l'ordre indiqué, un hydrocyclone introducteur (1) selon l'invention, un hydrocyclone pré-réacteur (2) selon l'invention, et un réacteur.

Plus précisément et comme décrit précédemment, l'hydrocyclone introducteur (1) est positionné verticalement selon son axe central, sa partie supérieure cylindrique (1') étant placée vers le haut, et sa partie inférieure tronconique (1") vers le bas. L'hydrocyclone introducteur (1) est placé en amont de l'hydrocyclone pré-réacteur (2) de façon à ce que la tubulure de sortie (1e) de l'hydrocyclone introducteur (1) soit en connexion fluidique avec l'orifice d'entrée de l'hydrocyclone pré-réacteur (2), ledit orifice d'entrée étant positionné dans la partie supérieure cylindrique (2') de l'hydrocyclone pré-réacteur (2). L'hydrocyclone pré-réacteur (2) est positionné verticalement selon son axe central, sa partie supérieure cylindrique (2') étant placée vers le haut, et sa partie inférieure tronconique (2") vers le bas. L'hydrocyclone pré-réacteur (2) est placé en aval de l'hydrocyclone introducteur (1) et en amont d'un réacteur. L'orifice de sortie de l'hydrocyclone pré-réacteur (2) est en connexion fluidique avec l'orifice d'entrée du réacteur. De préférence, ledit orifice de sortie est positionné à l'extrémité de la partie inférieure tronconique (2") de l'hydrocyclone pré-réacteur (2).

Dans un mode préféré de réalisation de l'invention, ledit dispositif comprend un moyen de recyclage pour amener une partie d'un mélange réactionnel contenu dans le réacteur jusqu'à l'injecteur ou les injecteurs tangentiel(s) (2a) de l'hydrocyclone pré-réacteur (2).

Dans un autre mode préféré de réalisation de l'invention, ledit dispositif comprend un moyen de recyclage pour amener une partie d'un mélange réactionnel contenu dans le réacteur jusque dans la partie cylindrique supérieure (1') de l'hydrocyclone introducteur (1), de préférence au niveau de l'injecteur tangentiel (1d) pour le réactif liquide.

Par exemple, lesdits moyens de recyclage sont des tuyaux compatibles chimiquement avec la nature du mélange réactionnel. Les tuyaux sont en outre reliés à un système de pompage, comme par exemple une pompe à membrane, à un moyen de régulation de débit, comme par exemple un débimètre, et à un ballon de réserve. L'homme du métier sait quel équipement est adapté à la réaction chimique qu'il choisit de mettre en oeuvre dans le dispositif selon l'invention.

### EXEMPLES

### I. Exemple de réaction polyphasée mise en oeuvre selon le procédé et selon le dispositif de l'invention

L'exemple de réaction polyphasée est un exemple des plus complexes, à savoir une réaction biphasée entre un réactif liquide et un réactif solide engendrant un dégagement gazeux et un dépôt d'insolubles immédiats. Plus précisément, l'exemple concerne la neutralisation d'un acide minéral fort contenant un métal lourd par du calcaire broyé.

Le réactif liquide est de l'acide sulfurique aqueux contenant du sulfate de fer. Ce type d'acide est très courant dans le traitement des surfaces métalliques. La composition en poids du réactif liquide est : 12,7 % d'acide sulfurique (H₂SO₄), 87,24% en eau (H₂O) et 0,06% de sulfate de fer (Fe₂(SO₄)₃). La densité de l'acide sulfurique utilisé est de 1,1 et le pH de 0,5.

Le réactif solide est du calcaire contenant plus de 98% de carbonate de calcium (CO₃Ca). Il est de granulométrie inférieure à 100µm.

La mise en contact du réactif liquide avec le réactif solide conduit aux deux réactions chimiques suivantes :
a) la neutralisation de l'acide sulfurique aqueux avec dégagement de dioxyde de carbone (CO₂) et formation d'un sel de sulfate de calcium (SO₄Ca) insoluble. 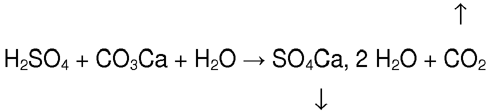
b) la formation d'hydroxyde de fer (sel métallique, Fe(OH)₃) avec dégagement de dioxyde de carbone et formation d'un sel de sulfate de calcium (SO₄Ca) :

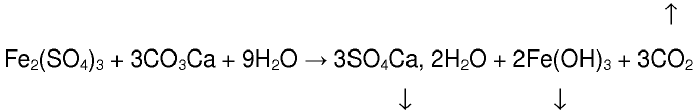

Le procédé utilisé est schématisé sur la figure 4. Le liquide acide est placé dans le réservoir (4) et le calcaire est dosé par une vis doseuse (9) à la sortie d'une trémie d'alimentation. Le débit d'acide est réglé par le débitmètre (3) et le débit du calcaire par les paramètres structuraux et de réglage de la vis doseuse (9).

Le liquide acide est introduit tangentiellement dans la partie supérieure cylindrique (1') de l'hydrocyclone introducteur (1) pour former un vortex dans la partie inférieure tronconique (1 ") dudit hydrocyclone. Le calcaire broyé sortant de la vis doseuse (9) et entrant dans le dispositif tubulaire central (1a) chauffé à 150°C est acheminé par gravité jusqu'à venir en contact avec le réactif liquide à la surface interne du vortex. Le mélange réactionnel ainsi formé est refoulé par le vortex liquide dans l'hydrocyclone pré-réacteur (2) puis passe dans le réacteur (10).

Une pompe (11) permet le recyclage du mélange réactionnel du réacteur (10) vers l'hydrocyclone introducteur (1) et vers l'hydrocyclone pré-réacteur (2) au niveau de leur(s) injecteur(s) tangentiel(s) pour liquide respectifs. En fin d'alimentation des réactifs, le recyclage vers l'hydrocyclone introducteur (1) est arrêté, mais de préférence il se poursuit jusqu'à la fin des réactions vers l'hydrocyclone pré-réacteur (2). Avant que le milieu réactionnel ne soit réinjecté vers les hydrocyclones (1) et (2), le pH et la température du milieu réactionnel recyclé sont contrôlés dans le ballon (8). Le milieu réactionnel est ensuite transféré dans le réservoir (5) qui permet d'équilibrer les débits entre les différents injecteurs de l'hydrocyclone pré-réacteur (2). Les dégagements gazeux sont neutralisés dans le réservoir (6), l'aspiration étant assurée par l'éjecteur à eau (7). La dépression est de l'ordre de - 200mm CE (colonne d'eau).

### II. Comparaison des bilans de matières de deux réactions polyphasées de neutralisation d'un acide usé

Une des réactions polyphasées est réalisée entre un réactif solide (calcaire broyé) et un réactif liquide (acide) dans le dispositif selon l'invention, et l'autre est réalisée entre deux réactifs liquides (lait de chaux et acide) dans un dispositif traditionnel.

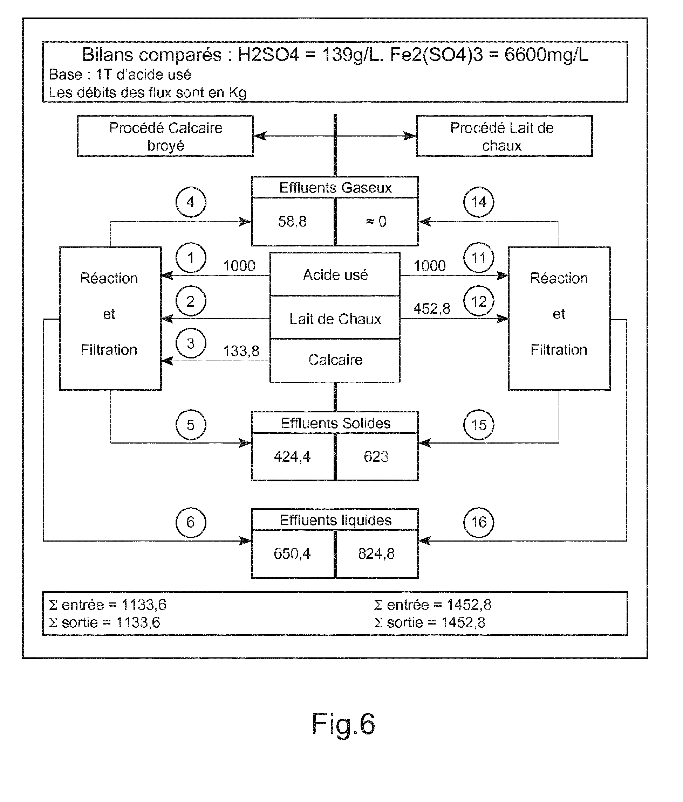

La comparaison des bilans de matières et de la productivité entre les deux réactions polyphasées a été réalisée sur un banc d'essai de laboratoire équipé d'un réacteur de 2L de capacité utile. Les résultats sont présentés dans le tableau de la figure 6. Ces résultats montrent clairement l'avantage du procédé et du dispositif selon l'invention. En effet, la réaction utilisant le calcaire broyé permet une diminution de 57% du dégagement de CO₂ dans l'atmosphère, et par conséquent une forte diminution des émissions de gaz à effet de serre. Cette diminution des rejets de dioxyde de carbone dans l'atmosphère est liée à la suppression de l'émission de dioxyde de carbone nécessitée par la production préalable d'oxyde de calcium à partir du calcaire à haute température. La réaction utilisant le calcaire broyé permet aussi une diminution de la consommation d'énergie fossile, avec en outre une économie de plus de 390Kg de combustible fossile par tonne d'oxyde de calcium (CaO) engagé dans la réaction polyphasée.

Pour les deux réactions polyphasées, la quantité de CaO engagée est identique, à savoir de 74,8 kg. Le pH final du mélange réactionnel dans les deux cas est aussi identique, à savoir de 7,5. Le temps de réaction pour le procédé avec le calcaire broyé est de 11 minutes et celui pour le procédé avec le lait de chaux de 15 minutes. Le volume réactionnel dans le cas du procédé avec le calcaire broyé est de 2000cc et celui dans le cas du procédé avec le lait de chaux est de 1390cc pour un réacteur ayant un volume utile de 2000cc. Cette importante différence de volume (+44% dans le cas du calcaire) est due à l'absence de volume occupé par l'inerte liquide du lait de chaux, à savoir l'eau, alors que l'inerte du calcaire est du dioxyde de carbone qui se dégage au fur et à mesure de l'avancée de la réaction.

### III. Essais pour ajuster et modéliser le temps de résidence du mélange réactionnel dans la partie inférieure tronconique (1") de l'hydrocyclone introducteur (1)

Les hydrocyclones introducteurs (1) utilisés pour les séries d'essais suivantes comportent chacun un injecteur tangentiel (1d) pour un réactif liquide faisant un angle de 6° par rapport à un axe perpendiculaire à l'axe central dudit hydrocyclone. La partie inférieure tronconique (1") de chaque hydrocyclone introducteur (1) fait un angle de 80° par rapport à un axe perpendiculaire à l'axe central de dudit hydrocyclone introducteur (1).

Le réactif liquide utilisé est de l'eau afin de simuler le comportement d'un liquide acide aqueux dilué, l'eau étant dans ce cas le constituant majoritaire du réactif liquide.

### Légende

D entrée : diamètre de l'injecteur tangentiel (1 d)
D sortie : diamètre [BC] de l'orifice de sortie de l'hydrocyclone introducteur (1)
HI : hydrocyclone introducteur
P sortie : pression en sortie de l'hydrocyclone introducteur (1)
Q entrée : débit d'introduction du réactif liquide dans l'hydrocyclone introducteur (1)
S entrée : surface de la section droite de l'injecteur tangentiel (1 d) (πx(D entrée/2)²)
S sortie : surface de la section droite de la tubulure de sortie (1e) au niveau de BC (πx(D sortie/2)²₎
T_{rés :} temps résidentiel du réactif liquide
V sortie injecteur : vitesse de sortie du réactif liquide de l'injecteur tangentiel (1d) (Q entrée /S entrée)
V sortie HI : vitesse de sortie du réactif liquide de l'hydrocyclone introducteur (1) (Q entrée/S sortie)
V_{ABCD} : volume du tronc de cône ABCD
V_{AGD} : volume du cône AGD
V_{rés} : volume résidentiel du réactif liquide

Le tableau 1 présente des exemples de conditions expérimentales (géométrie de l'hydrocyclone introducteur (1) et débit d'introduction du réactif liquide) qui permettent d'obtenir un temps de résidence du mélange réactionnel dans la partie inférieure tronconique (1 ") de l'hydrocyclone introducteur (1) inférieur à 1 seconde. Les essais sont réalisés sans création de dépression à la sortie de l'hydrocyclone introducteur (1).

**Tableau 1**

| **Volume de HI(1) en m³** | **Q entrée (cm³/sec)** | **D sortie (cm)** | **S sortie (cm²)** | **V sortie HI (cm/sec)** | **V_{ABCD} (cm³)** | **V_{AGD} (cm³)** | **V_{rés} (cm³)** | **T_{rés} (sec)** |
|---|---|---|---|---|---|---|---|---|
| 5 | 1390 | 10 | 78 ,5 | 17,7 | 1823 | 1246 | 577 | 0,4 |
| 10 | 2780 | 15 | 176,7 | 15,7 | 5376 | 4192 | 1184 | 0,4 |
| 20 | 2780 | 15 | 176,7 | 15,7 | 5376 | 4192 | 1184 | 0,4 |
| 30 | 4170 | 20 | 314 | 13,3 | 13225 | 9989 | 3236 | 0,8 |
| 40 | 5550 | 20 | 314 | 17,7 | 13225 | 9989 | 3236 | 0,6 |

Le tableau 2 présente les résultats d'essais réalisés dans un hydrocyclone introducteur (1) de géométrie donnée et en faisant varier le débit d'introduction du réactif liquide et/ou la pression en sortie de l'hydrocyclone introducteur (1) tout en maintenant un temps de résidence du mélange réactionnel égal ou inférieur à 2 secondes.

**Tableau 2**

| **P sortie (cm CE)** | **D sortie (cm)** | **S sortie (cm²)** | **Q entrée (cm³/sec)** | **V sortie HI (cm/sec)** | **Aα (cm)** | **αβ (cm)** | **βH (cm)** | **αH (cm)** | **Bβ (cm)** | **αG (cm)** | **V_{ABCD} (cm³)** | **VAGD (cm³)** | **V_{rés} (cm³)** | **T_{rés} (sec)** |
|---|---|---|---|---|---|---|---|---|---|---|---|---|---|---|
| 1000 | 2,5 | 4,91 | 66,66 | 13,58 | 2,66 | 8 | 7,1 | 15,1 | 1,25 | 3,5 | 100 | 25,9 | 74,1 | 0,9 |
| 1000 | 2,5 | 4,91 | 83,33 | 16,97 | 3,15 | 11 | 7,1 | 18,07 | 1,25 | 4 | 181,1 | 42,6 | 138,5 | 1,66 |
| 960 | 2,5 | 4,91 | 66,66 | 13,58 | 1,96 | 4 | 7,1 | 11,07 | 1,25 | 3,5 | 32,8 | 16,04 | 16,76 | 0,28 |
| 960 | 2,5 | 4,91 | 83,33 | 16,97 | 2,49 | 7 | 7,1 | 14,1 | 1,25 | 4,1 | 79,7 | 22,7 | 57 | 0,68 |

Les tableaux 3a et 3b présentent des essais comparatifs réalisés dans des hydrocyclones introducteurs (1) de volumes variables et dans des conditions fixes de dépression en sortie de l'hydrocyclone introducteur (1) et de débit d'introduction du réactif liquide.

**Tableau 3a**

| **Essais** | **P sortie (mm CE)** | **Volume de HI (1) en m³** | **Q entrée en cm³/s** | **Durée de chargement de HI (1) en heures** | **D sortie (cm)** | **S sortie (cm²)** | **V sortie HI (cm/sec)** | **V sortie injecteur (m/sec)** |
|---|---|---|---|---|---|---|---|---|
| Série 1, A | -75,0 | 5,0 | 1800,0 | 0,8 | 9,3 | 67,9 | 26,5 | 6,6 |
| Série 1, B | -75,0 | 10,0 | 1800,0 | 1,5 | 9,3 | 67,9 | 26,5 | 6,6 |
| Série 2, A | -150,0 | 20,0 | 3000,0 | 1,9 | 11,8 | 109,3 | 27,4 | 6,9 |
| Série 2, B | -150,0 | 30,0 | 3000,0 | 2,8 | 11,8 | 109,3 | 27,4 | 6,9 |
| Série 2, C | -150,0 | 40,0 | 3000,0 | 3,7 | 11,8 | 109,3 | 27,4 | 6,9 |

**Tableau 3b**

| **Essais** | **Bβ (cm)** | **βH (cm)** | **αH (cm)** | **αβ (cm)** | **Aα (cm)** | **αG (cm)** | **V_{ABCD} (cm³)** | **V_{AGD} (cm³)** | **V_{rés} (cm³)** | **T_{rés} (sec)** |
|---|---|---|---|---|---|---|---|---|---|---|
| Série 1, A | 4,7 | 26,3 | 53,6 | 27,3 | 9,5 | 17,8 | 4489 | 1682 | 2807 | 1,56 |
| Série 1, B | 4,7 | 26,3 | 53,6 | 27,3 | 9,5 | 17,8 | 4489 | 1682 | 2807 | 1,56 |
| Série 2, A | 5,9 | 33,4 | 63,6 | 30,2 | 11,3 | 21,2 | 7248 | 2835 | 4413 | 1,47 |
| Série 2, B | 5,9 | 33,4 | 63,6 | 30,2 | 11,3 | 21,2 | 7248 | 2835 | 4413 | 1,47 |
| Série 2, C | 5,9 | 33,4 | 63,6 | 30,2 | 11,3 | 21,2 | 7248 | 2835 | 4413 | 1 ;47 |

Les essais présentés dans les tableaux 4a et 4b ont été réalisés dans un hydrocyclone introducteur (1) de géométrie donnée avec une dépression de - 45mm CE en sortie de l'hydrocyclone introducteur (1) et un débit variable d'introduction du réactif liquide.

**Tableau 4a**

| | **θ (degré)** | **D entrée (cm)** | **S entrée (cm²)** | **D sortie (cm)** | **S sortie (cm²)** | **Q entrée (cm³/sec)** | **V sortie injecteur (cm/sec)** | **V sortie HI (cm/sec)** | **Rapport V sortie injecteur / V sortie HI** |
|---|---|---|---|---|---|---|---|---|---|
| **Essai 1** | 80 | 0,4 | 0,126 | 2 | 3,14 | 66,66 | 530,7 | 21,2 | 25 |
| **Essai 2** | 80 | 0,4 | 0,126 | 2 | 3,14 | 83,33 | 661,3 | 26,5 | 25 |

**Tableau 4b**

| | **Bβ en cm** | **βH en cm** | **α₁β en cm** | **α₁H en cm** | **α₁H/βH** | **A₁α₁ en cm** | **α₁G₁ en cm** | **σ en cm** | **Volume A₁BCD₁ en cm³** | **Volume A₁G₁D₁ en cm³** | **V_{rés} en cm³** | **T_{rés} en sec** |
|---|---|---|---|---|---|---|---|---|---|---|---|---|
| **Essai 1** | 1 | 5,66 | 3,5 | 9,16 | 1,62 | 1,6 | 3,5 | 65 | 18,9 | 9,4 | 8,5 | 0,1 |
| **Essai 2** | 1 | 5,66 | 6,5 | 12,16 | 2,15 | 2,1 | 4 | 62 | 27,5 | 16,1 | 11,4 | 0,15 |

## Revendications

1. Procédé pour la réalisation d'une réaction chimique polyphasée comprenant la mise en contact d'au moins un réactif liquide avec au moins un réactif solide, cette mise en contact de réactif solide et de réactif liquide résultant éventuellement en la création de mousses et/ou de dépôts insolubles, dans un hydrocyclone introducteur (1) présentant une partie supérieure cylindrique (1') et une partie inférieure tronconique (1 "), ledit procédé comprenant l'introduction tangentielle du réactif liquide dans la partie supérieure cylindrique (1') de l'hydrocyclone introducteur (1) de manière à créer un vortex dans la partie inférieure tronconique (1") de l'hydrocyclone introducteur (1), ladite partie inférieure tronconique (1") présentant un volume résidentiel pour le vortex, et l'introduction du réactif solide dans l'hydrocyclone introducteur (1) se faisant à la surface interne du vortex pour former un mélange réactionnel, **caractérisé en ce que** le débit d'introduction du réactif liquide et le volume résidentiel pour le vortex sont tels que le temps de résidence du mélange réactionnel dans la partie inférieure tronconique (1") de l'hydrocyclone introducteur (1) varie de 0,3 à 2 secondes, de préférence de 0,5 à 1,6 secondes, et mieux est égal ou inférieur à 1 seconde, et **en ce que** le mélange réactionnel est transféré de l'hydrocyclone introducteur (1) à un hydrocyclone pré-réacteur (2) destiné à être en connexion fluidique avec un réacteur.

2. Procédé selon la revendication 1, **caractérisé en ce que** l'hydrocyclone pré-réacteur (2) comprend une partie supérieure cylindrique (2') et une partie inférieure tronconique (2"), ledit mélange réactionnel étant transféré depuis l'hydrocyclone introducteur (1) dans la partie supérieure cylindrique (2') de l'hydrocyclone pré-réacteur (2).

3. Procédé selon l'une quelconque des revendications 1 ou 2, **caractérisé en ce que** l'hydrocyclone pré-réacteur (2) comprend une enveloppe externe présentant une partie supérieure cylindrique (2') et une partie inférieure tronconique (2"), la partie supérieure cylindrique (2') de l'enveloppe externe comprend en son sommet un orifice d'entrée pour le mélange réactionnel, et au moins un injecteur tangentiel (2a), de préférence trois injecteurs tangentiels (2a), la surface interne de la partie inférieure tronconique (2") de l'hydrocyclone pré-réacteur (2) située sous le ou les injecteur(s) tangentiel(s) (2a) étant 5 à 10 fois supérieure à la surface de la section droite du réacteur.

4. Procédé selon l'une quelconque des revendications 1 à 3, **caractérisé en ce que** la mise en contact du réactif liquide avec le réactif solide provoque un dégagement gazeux avec formation de mousses, l'élimination du gaz s'effectuant dans l'hydrocyclone pré-réacteur (2).

5. Procédé selon l'une quelconque des revendications 1 à 4, **caractérisé en ce que** le mélange réactionnel contenu dans l'hydrocyclone pré-réacteur (2) est transféré dans un réacteur.

6. Procédé selon la revendication 5, **caractérisé en ce qu'**une partie du mélange réactionnel contenu dans le réacteur est réinjectée tangentiellement dans la partie supérieure cylindrique (2') de l'hydrocyclone pré-réacteur (2).

7. Dispositif pour la mise en oeuvre du procédé selon l'une quelconque des revendications 1 à 6, **caractérisé en ce qu'**il comprend en communication fluidique dans l'ordre indiqué un hydrocyclone introducteur (1) et un hydrocyclone pré-réacteur (2) destiné à être en connexion fluidique avec un réacteur, et **en ce que** l'hydrocyclone introducteur (1) comprend une enveloppe externe présentant une partie supérieure cylindrique (1') et une partie inférieure tronconique (1") se terminant par une tubulure de sortie (1e), l'enveloppe externe de la partie supérieure cylindrique (1') comprend au moins un injecteur tangentiel (1 d) pour un réactif liquide, et un dispositif tubulaire central coaxial (1a) pour l'introduction d'un réactif solide comportant un orifice de sortie pour délivrer le réactif solide à la surface interne d'un vortex du réactif liquide, ledit orifice de sortie étant situé à l'intérieur de la partie inférieure tronconique (1") de l'enveloppe externe de l'hydrocyclone introducteur (1) de manière à ce que pour un débit d'introduction donné du réactif liquide, le temps de résidence du mélange réactionnel du réactif liquide et du réactif solide dans la partie inférieure tronconique (1") varie de 0,3 à 2 secondes, de préférence de 0,5 à 1,6 secondes, et mieux est égal ou inférieur à 1 seconde.

8. Dispositif selon la revendication 7 **caractérisé en ce que** l'hydrocyclone pré-réacteur (2) comprend une enveloppe externe présentant une partie supérieure cylindrique (2') et une partie inférieure (2") tronconique, la partie supérieure cylindrique (2') de l'enveloppe externe comprend en son sommet un orifice d'entrée pour un mélange réactionnel, et au moins un injecteur tangentiel (2a), de préférence trois injecteurs tangentiels (2a), la surface interne de la partie inférieure tronconique (2") de l'hydrocyclone pré-réacteur (2) située sous le ou les injecteur(s) tangentiel(s) (2a) étant 5 à 10 fois supérieure à la surface de la section droite du réacteur.

9. Dispositif selon l'une quelconque des revendications 7 ou 8, **caractérisé en ce que** l'injecteur tangentiel (1 d) pour un réactif liquide de l'hydrocyclone introducteur (1) fait un angle positif (γ) variant de 0 à 10°, de préférence de 5° à 7°, et typiquement de 6°, par rapport à un axe perpendiculaire à l'axe central de l'enveloppe externe de l'hydrocyclone introducteur (1).

10. Dispositif selon l'une quelconque des revendications 7 à 9, **caractérisé en ce que** la partie inférieure tronconique (1") de l'enveloppe externe de l'hydrocyclone introducteur (1) fait un angle θ variant de 70° à 85° par rapport à un axe perpendiculaire à l'axe central de l'enveloppe externe de l'hydrocyclone introducteur (1).

11. Dispositif selon l'une quelconque des revendications 7 à 10, **caractérisé en ce que** l'orifice de sortie du dispositif tubulaire central coaxial de l'hydrocyclone introducteur (1) pour l'introduction d'un réactif solide est situé au droit du centre (β) de la tubulure de sortie (1 e) et à une distance variant de 5 à 10 cm au-dessus de la spire supérieure du vortex.

12. Dispositif selon l'une quelconque des revendications 8 à 11, **caractérisé en ce que** la partie supérieure cylindrique (2') de l'enveloppe externe de l'hydrocyclone pré-réacteur (2) comprend au moins une tubulure (2b) pour évacuer des dégagements gazeux vers l'extérieur de l'hydrocyclone pré-réacteur (2).

13. Dispositif selon l'une quelconque des revendications 7 à 12, **caractérisé en ce qu'**il comprend un réacteur en communication fluidique avec l'hydrocyclone pré-réacteur (2).

14. Dispositif selon la revendication 13, **caractérisé en ce qu'**il comprend un moyen de recyclage pour amener une partie d'un mélange réactionnel contenu dans le réacteur jusqu'à l'injecteur ou les injecteurs tangentiel(s) (2a) de l'hydrocyclone pré-réacteur (2).

15. Dispositif selon la revendication 13 ou 14, **caractérisé en ce qu'**il comprend un moyen de recyclage pour amener une partie d'un mélange réactionnel contenu dans le réacteur jusqu'à l'injecteur ou les injecteurs tangentiel(s) (1 d) de l'hydrocyclone introducteur (1).
